(19) Europäisches Patentamt
European Patent Office
Office européen des brevets

(11) EP 3 590 608 A1

(12) DEMANDE DE BREVET EUROPEEN

(43) Date de publication:
08.01.2020 Bulletin 2020/02

(51) Int Cl.:
B05C 5/02 (2006.01)          B05C 11/10 (2006.01)
B01F 3/08 (2006.01)          C08G 18/28 (2006.01)
C09J 7/00 (2018.01)

(21) Numéro de dépôt: 19187679.6

(22) Date de dépôt: 19.12.2014

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: 19.12.2013 FR 1363079

(62) Numéro(s) de document de la (des) demande(s)
initiale(s) en application de l'article 76 CBE:
14199355.0 / 2 886 201

(71) Demandeur: BOSTIK SA
92700 Colombes (FR)

(72) Inventeurs:
• Chartrel, Jean-François
  60400 Cuts (FR)
• Laferte, Olivier
  60350 Trosly Breuil (FR)
• Lalouch, Lahoussaine
  60400 Noyon (FR)

(74) Mandataire: Bandpay & Greuter
30, rue Notre-Dame des Victoires
75002 Paris (FR)
Remarques:
Cette demande a été déposée le 22-07-2019 comme
demande divisionnaire de la demande mentionnée
sous le code INID 62.

(54) **PROCÉDÉ D'APPLICATION À CHAUD D'UNE COMPOSITION ADHÉSIVE SILYLÉE**

(57) L'invention se rapporte à un procédé d'application à chaud d'une composition adhésive (80) sur un support (96), à l'aide d'une installation comprenant : une buse (50) d'application de la composition adhésive (80), une ligne (88) d'alimentation de la buse (50) avec la composition adhésive (80) à appliquer sous forme fluide, un mélangeur (30) disposé dans la ligne d'alimentation (88) pour le mélange homogène des composants de base de la composition adhésive avant son application ; la composition adhésive (80) appliquée comportant comme composants de base : un prépolymère silylé, une résine tackifiante compatible ; la composition adhésive comprenant un catalyseur de réticulation ; le procédé comprenant : l'approvisionnement de la ligne (88) d'alimentation avec le prépolymère silylé séparé du catalyseur de réticulation , le mélange du catalyseur de réticulation avec les composants de base à l'aide du mélangeur (30), l'application à chaud de la composition adhésive (80) mélangé sur un support (96).

Fig.5

EP 3 590 608 A1

**Description**

L'invention concerne un procédé d'application à chaud d'une composition adhésive silylée avec un approvisionnement séparé des composants de base de la composition adhésive.

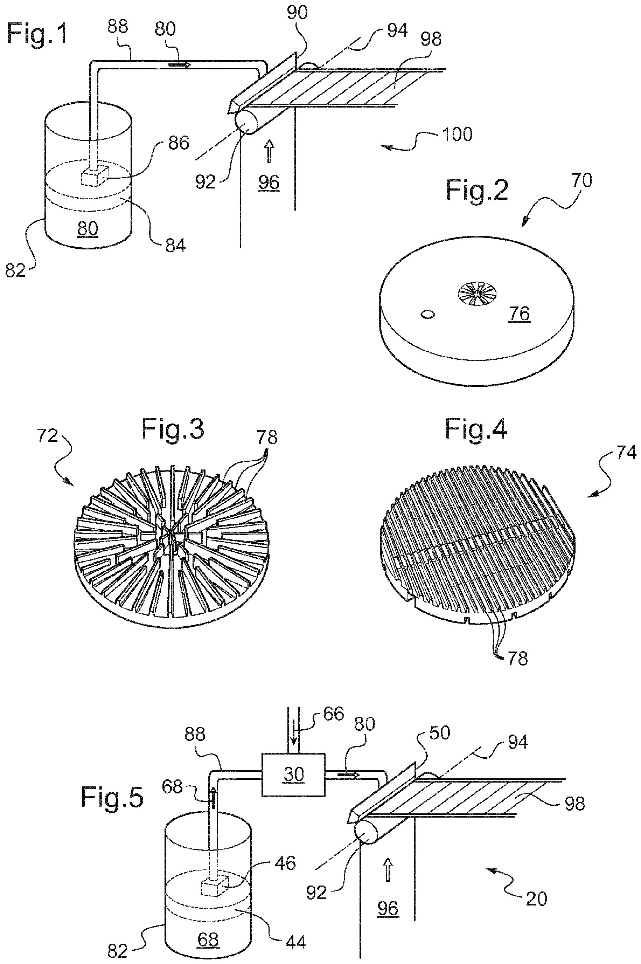

Dans l'industrie des adhésifs, des surfaces adhésives peuvent être produites par la technique de l'application à chaud de la composition adhésive sur une surface. La figure 1 montre une installation 100 selon l'art antérieur d'application à chaud d'une composition adhésive 80. Cette installation 100 comprend un réservoir 82 de stockage de la composition adhésive 80, ici sous la forme d'un fût de 200 litres. La composition adhésive 80 est destinée à être appliquée sur une surface 96, ici un film de polyester défilant sur un cylindre 92 d'axe 94. Cette application est réalisée à l'aide d'une buse 90 d'encollage pour former une surface adhésive 98. L'alimentation de la buse en composition adhésive à appliquer 80 est réalisée à l'aide d'une ligne 88 de communication fluidique de la composition adhésive entre le fût et la buse 90, la ligne 88 étant munie d'une pompe 86 de circulation de la composition adhésive.

Pour faciliter l'application par la buse 90 et le pompage depuis le fût jusqu'à la buse 90, la composition adhésive 80, qui peut être un liquide très visqueux à la température ambiante est par exemple chauffée à une température de 100°C à 180°C pour présenter une viscosité suffisante. L'installation 100 comprend alors un moyen de chauffage 84 en amont de la pompe 86. Le moyen de chauffage 84 correspond par exemple à un plateau de fusion mis en contact avec la composition adhésive dans le fût. Ce plateau de fusion est chauffé électriquement par des résistances chauffantes. La quantité de chaleur communiquée du moyen de chauffage 84 à la composition adhésive 80 dépend notamment de la surface d'échange entre le moyen de chauffage 84 et la composition adhésive 80. En référence aux figures 2, 3 et 4, différentes variantes du plateau de fusion peuvent alors être envisagées, respectivement une variante 70 avec surface d'échange 76 lisse et des variantes 72 et 74 avec des surfaces d'échanges présentant des ailettes 78.

Cette installation 100 ne présente toutefois pas un fonctionnement satisfaisant dans les cas où la composition adhésive 80 à appliquer comprend un prépolymère réactif et présente une température d'application, de 100 à 120°C par exemple, trop proche d'une plage de température de réticulation, de 100°C à 140°C par exemple. En effet, une telle composition adhésive 80 chauffée dans le réservoir de stockage 82 avec une température cible de chauffage supérieure ou égale à 100°C commence à réticuler, et a fortiori en présence d'humidité. Or avec un tel moyen de chauffage 84 dans le réservoir de stockage 82, d'une part le temps de séjour de la composition adhésive 80 à 100°C est mal maîtrisé et d'autre part la température réellement appliquée est aussi mal maîtrisée. Il existe donc un risque de réticulation complète de la composition adhésive 80 au contact des ailettes 78 du moyen de chauffage 84, résultant en la formation d'un bloc compact réticulé. Un tel bloc réticulé est susceptible de boucher le plateau de fusion 72 ou 74 et d'empêcher toute circulation de composition adhésive 80 fluide jusqu'à la buse d'application 90.

Ce risque d'encrassement du plateau de fusion 72 ou 74 est particulièrement aggravé pour les compositions adhésives réticulant avec l'humidité. En effet, chaque changement de fût expose les résidus de compositions adhésives sur le plateau à l'humidité de l'air renforçant alors la réticulation de ces résidus sur le plateau.

Il existe donc un besoin pour l'application d'une composition adhésive réactive présentant une température d'application proche d'une température de réticulation.

Plus particulièrement, l'invention vise à fournir une installation et un procédé d'application d'une telle composition adhésive.

A cette fin, la présente invention propose un procédé d'application à chaud d'une composition adhésive sur un support, à l'aide d'une installation d'application à chaud de la composition adhésive, l'installation comprenant :

- une buse d'application de la composition adhésive,
- une ligne d'alimentation de la buse avec la composition adhésive à appliquer sous forme fluide,
- un mélangeur disposé dans la ligne d'alimentation pour le mélange homogène des composants de base de la composition adhésive avant son application ;

la composition adhésive appliquée comportant comme composants de base :

- de 20% à 85% en poids, de préférence de 30 à 75% en poids de prépolymère silylé,
- de 15 à 80% en poids, de préférence de 25 à 70% en poids de résine tackifiante compatible ;

la composition adhésive comprenant en outre de 0,01 à 3 % en poids, de préférence de 0,1 à 2% en poids de catalyseur de réticulation ;

le procédé comprenant :

- l'approvisionnement de la ligne d'alimentation avec l'au moins un prépolymère silylé séparé du catalyseur de réticulation,
- le mélange du catalyseur de réticulation avec les composants de base à l'aide du mélangeur,
- l'application à chaud de la composition adhésive mélangé sur un support à l'aide la buse d'application.

Suivant des modes de réalisation préférés, l'invention comprend une ou plusieurs des caractéristiques suivantes :

- lors de l'approvisionnement de la ligne, le catalyseur de réticulation est séparé de l'ensemble des composants de base de la composition adhésive ;
- le mélangeur est un mélangeur statique, de préférence le mélangeur statique comporte un matériaux conducteur, l'installation d'application à chaud comprenant un dispositif de chauffage en ligne, en amont du point de mélange du catalyseur de réticulation avec les composants de base et incluant le mélangeur statique et un câble inducteur entourant le mélangeur statique, le procédé comprenant, préalablement à l'application à chaud, le chauffage de la composition adhésive jusqu'à la température d'application, par l'alimentation électrique du câble inducteur du dispositif de chauffage en ligne ;
- le mélangeur est un mélangeur dynamique ;
- la composition adhésive à appliquer comprend un prépolymère réactif réticulant dans une plage de température, la composition adhésive à appliquer présentant une plage de température d'application incluse dans la plage de température de réticulation ;
- la composition adhésive à appliquer réticule à l'humidité ;
- l'installation comprend des moyens de chauffage apte à être disposés au niveau d'un réservoir de stockage comprenant au moins un des composants de base séparés pour élever l'au moins un composant de base séparé à une température de pompage, de préférence l'au moins un composant de base séparé est élevée à une température de pompage comprise entre 50°C et 140°, de préférence comprise entre 80°C et 120°C, plus préférentiellement entre 100°C et 110°C ;
- la composition adhésive est appliquée à une température comprise entre 50°C et 140°, de préférence comprise entre 80°C et 120°C, plus préférentiellement entre 100°C et 110°C.

D'autres caractéristiques et avantages de l'invention apparaîtront à la lecture de la description qui suit des modes de réalisation de l'invention, donnés à titre d'exemple et en référence aux dessins annexés.

La figure 1 montre une installation d'application de composition adhésive selon l'art antérieur.
Les figures 2, 3 et 4 montrent différentes variantes de plateau de fusion utilisées dans l'installation de la figure 1.
La figure 5 montre une installation susceptible de mettre en oeuvre le procédé proposée d'application de composition adhésive.
La figure 6 montre un mode de réalisation du mélangeur dynamique utilisé dans le procédé proposé.
La figure 7 montre un mode de réalisation du mélangeur statique utilisé dans le procédé proposé.
La figure 8 montre une olive de réduction de section au point de mélange des composants.
La figure 9 montre un dispositif de chauffage comprenant le mélangeur statique de la figure 7.

Il est proposé un procédé d'application à chaud d'une composition adhésive, en particulier d'une composition adhésive réticulable et notamment d'une composition adhésive réticulable à la chaleur et/ou réticulable à l'humidité. Cette composition adhésive peut correspondre à une composition adhésive sensible à la pression (également connu en anglais sous l'expression *"pressure sensitive adhesive"* abrégée en *"PSA"*).

La composition adhésive à appliquer est une composition adhésive silylée. La composition adhésive peut ainsi correspondre aux compositions adhésives décrites dans le document WO 2012/090151 A2, l'au moins un prépolymère silylé étant par exemple un polyuréthane ou un polyéther comprenant 2 groupes terminaux de type alkoxysilane hydrolysables. En particulier la composition adhésive à appliquer comprend :

- de 20% à 85% en poids, de préférence de 30 à 75% en poids de l'au moins un prépolymère silylé ;
- de 15 à 80% en poids, de préférence de 25 à 70% en poids de l'au moins une résine tackifiante compatible ;
- de 0,01 à 3 % en poids, de préférence de 0,1 à 2% en poids d'au moins un catalyseur de réticulation.

L'au moins un prépolymère contenant un silyle et l'au moins une résine tackifiante compatible font parties des composants de base de la composition adhésive à appliquer. En d'autres termes ces composants sont les composants de la composition indispensables pour l'obtention de la performance d'adhésion. Le prépolymère silylé réagit avec l'humidité, la réaction étant favorisée par le catalyseur. En plus des composants de base, la composition adhésive à appliquer peut ainsi comprendre des additifs, tel que le catalyseur de réticulation ou encore un anti-oxydant.

Le catalyseur qui favorise la réticulation de la composition adhésive, et en particulier du prépolymère silylé avec l'humidité est désigné dans l'ensemble de ce document par l'expression « catalyseur de réticulation ». De même que dans le cas général, le catalyseur de réticulation doit être distingué d'un agent de réticulation (également désigné par les expressions anglaises « curing agent » ou « cross-linking agent »). Ici, le prépolymère silylé réagissant, en particulier réticulant, avec l'humidité, l'eau est un réactif qui correspond à l'agent de réticulation du prépolymère silylé. L'agent de réticulation est consommé par la réaction de réticulation en étant, au moins en partie, combiné chimiquement aux chaînes réticulées, formant un réseau tridimensionnel. L'agent de réticulation ne peut ainsi être récupéré à la fin de la réaction de réticulation. A l'inverse, le catalyseur de réticulation favorise seulement la réaction de réticulation, et n'est pas, même partiellement, combiné chimiquement avec les chaînes réticulés.

Le catalyseur de réticulation utilisable dans le procédé proposé d'application à chaud peut être tout catalyseur connu par l'homme du métier pour la condensation de silanol. On peut citer comme exemples de tels catalyseurs des dérivés organiques du titane comme l'acétyl acétonate de titane (disponible commercialement sous la dénomination TYZOR(R) AA75 auprès de la société DuPont), de l'aluminium comme le chélate d'aluminium (disponible commercialement sous la dénomination K-KAT® 5218 auprès de la société King Industries), des amines comme le 1,8-diazobicyclo (5.4.0) undécène-7 ou DBU.

Le procédé proposé d'application à chaud est réalisé à l'aide d'une installation d'application à chaud. La figure 5 montre une représentation schématique d'un mode de réalisation de l'installation 20. Les éléments communs aux figures 1 et 5 présentent les mêmes signes de référence.

L'installation 20 utilisée pour le procédé proposé diffère notamment de l'installation 100 de la figure 1 en ce qu'elle comporte un double approvisionnement de la ligne d'alimentation 88. Ce double approvisionnement permet la séparation du prépolymère silylé et du catalyseur de réticulation avant leur application en mélange à l'aide du procédé proposé.

Le catalyseur de réticulation se distingue notamment d'un agent de réticulation

Du fait du double approvisionnement, les composants 66, comprenant au moins le catalyseur de réticulation, sont séparés des composants 68, comprenant au moins le prépolymère silylé, jusqu'à un mélangeur 30 disposé dans la ligne d'alimentation 88. En d'autres termes, le mélangeur 30 est en ligne et permet la réalisation d'une étape de mélange homogène des composants 66 et 68 approvisionnés séparément à la ligne d'alimentation 88. L'injection des composants 66, comprenant au moins le catalyseur de réticulation, dans les composants de base 68, comprenant au moins le prépolymère silylé, est réalisée au niveau du mélangeur 30, tel qu'illustré, pour permettre le mélange immédiat de ces composants.

Le mélangeur 30 constitue une différence entre l'installation 20 illustrée en figure 5 et l'installation 100 précédemment illustrée par la figure 1 pour laquelle les composants de base sont déjà assemblés pour former la composition adhésive 80 dans le réservoir de stockage 82. Selon le procédé proposé, les composants sont au moins partiellement séparés en deux approvisionnements distincts de la ligne d'alimentation 88, le prépolymère silylé étant séparé du catalyseur de réticulation. Par exemple, le composant de base constitué par le prépolymère silylé peut être séparé des composants constitué par la résine tackifiante et le catalyseur de réticulation, de même, les composants de base constitués par le prépolymère silylé et la résine tackifiante peuvent être séparés du catalyseur de réticulation. Les composants 66 et 68 peuvent ainsi être séparés partiellement, c'est-à-dire qu'un groupe de composants peut être approvisionné séparément d'un autre groupe de composants. Alternativement les composants peuvent être séparés totalement, c'est-à-dire que chaque composant est approvisionné séparément à l'installation d'application à chaud 20.

Dans tous les cas, la séparation d'au moins le prépolymère silylé et du catalyseur de réticulation tels que précédemment définis permet de contrarier la réaction chimique de réticulation avant la réunion des composants dans l'installation 20. La réaction chimique de réticulation étant contrariée dans chaque composant au moins partiellement séparé, ces composants présentent une plus grande stabilité : temporelle, à la température et à l'humidité. En d'autres termes, le procédé proposé permettant la réunion au niveau d'une même installation, ici 20, du mélange des composants 66 et 68 et de l'application de la composition adhésive, la stabilité des composants est améliorée.

La plus grande stabilité dans le temps permet un maintien en stockage plus long des composants entre leur production et leur application à chaud.

En outre, la plus grande stabilité des composants à la température et à l'humidité facilite l'application à chaud la composition adhésive. En effet, en référence à la figure 5, le composant 68 peut être chauffé dans le réservoir de stockage 82 à l'aide d'un moyen de chauffage 44, tel que les plateaux de fusion précédemment illustrés par les figures 2 à 4, sans provoquer la réticulation du composant 68 du fait de la séparation du composant 66, comprenant au moins le catalyseur de réticulation. Le chauffage dans le réservoir de stockage 82, représenté sous forme de fût, permet de diminuer la viscosité du composant 68, comprenant par exemple le prépolymère silylé et la résine tackifiante compatible, pour faciliter le pompage dans l'installation 20, tel qu'à l'aide d'une pompe 46, avant tout contact avec le composant 66 séparé, comprenant par exemple le catalyseur de réticulation.

Ce moyen de chauffage 44 contribue à la mise en température d'application du composant 68. La température d'application correspond à une température où la composition adhésive à appliquer présente une viscosité suffisamment faible pour permettre l'application, autrement dit l'enduction, de la composition adhésive 80 sur la surface 96. En effet, après le mélange des composants 66 et 68, la composition adhésive est constituée et peut être appliquée à chaud sur le support 96 à l'aide d'une buse d'application 50. Une température d'application de la composition adhésive 80 peut ainsi correspondre à une température où la viscosité de la composition adhésive est inférieure ou égale à 20 Pa.s, de préférence inférieure ou égale à 10 Pa.s. A titre d'exemple, la composition adhésive 80 peut présenter une viscosité de 15 $\pm$ 5 Pa.s à une température d'application de 100°C à 120°C. A la suite de l'application de la composition adhésive 80 sur la surface 96, le support enduit 98 est soumis à une température contrôlée, et éventuellement à un taux d'humidité contrôlé, pour permettre la réticulation de la composition adhésive. La température contrôlée peut être obtenue à l'aide d'un four ou d'une enceinte. La température contrôlée correspond à une température de réticulation de la composition adhésive 80 et est par exemple comprise entre 50°C et 200°C. Plus particulièrement, la température de réticulation comprise entre 80°C et 160°C ou encore comprise entre 100°C et 150°C.

De manière analogue le composant 66 peut lui aussi être chauffé avant son mélange avec le composant 68 sans risque de réticulation avant leur mélange.

Le chauffage de l'ensemble des composants 66 et 68 séparés avant leur mélange permet d'amener ces composants à la température d'application sans risque de réticulation avant leur mélange en ligne 88 dans le mélangeur 30. Le temps de séjour de la composition adhésive obtenue par le mélange est alors réduit par rapport au temps de séjour de ladite composition dans le procédé mis en oeuvre dans l'installation 100 de la figure 1

En permettant une réduction du temps de séjour à chaud de la composition adhésive 80, le procédé proposé peut effectuer la mise en température d'application de la composition adhésive 80, même dans le cas où la température d'application est incluse dans la plage de température de réticulation de la composition adhésive 80. Selon la température prévue d'application incluse dans la plage de température de réticulation, le temps de séjour à chaud de la composition adhésive 80 en mouvement peut alors être adapté. Le temps de séjour à chaud de la composition adhésive en mouvement peut notamment être modulé avec le débit de la composition adhésive 80 et la cylindrée de la ligne d'alimentation 88 depuis le point de mélange des composants séparés 66, 68 et la buse d'application 50. Par exemple, pour une composition adhésive 80 à appliquer à 100°C et présentant une plage de température de réticulation de 100°C à 120°C avec des temps de réticulation d'une à quelques minutes (sans apport additionnel d'humidité), le débit de la composition adhésive 80 en ligne peut être ajusté afin que la réaction de réticulation reste limitée pour ne pas encrasser l'installation avec de la composition adhésive réticulée. La progression de la réaction de réticulation peut être appréciée en référence au taux de conversion de la réaction de réticulation dans l'installation déterminé selon l'équation suivante :

$$(1) \qquad X = \frac{\dot{m}_0 - \dot{m}_t}{\dot{m}_0}$$

où X est le taux de conversion sans unité ;
$\dot{m}_0$ est le débit massique de composition adhésive non réticulé au niveau du réservoir de stockage 82 sous forme de fût ;
$\dot{m}_t$ est le débit massique de composition adhésive non réticulé au niveau de la buse 50.

Le débit de la composition adhésive 80 en ligne peut être ainsi être ajusté pour que, selon la cinétique de réaction et selon la température, le taux de conversion de la réaction de réticulation de la composition adhésive reste inférieur ou égal à 30%, de préférence inférieur ou égal à 10%. Le débit de la composition adhésive 80 dans le dispositif de chauffage en ligne est par exemple compris entre 80 g.s⁻¹ et 170 g.s⁻¹, soit environ de 5 à 10 Kg par minutes, tel que égal à 120g.s⁻¹, soit environ de 7 Kg par minutes.

Pour permettre un mélange des composants avec un débit élevé, le mélangeur en ligne 30 peut être adapté à un mélange très efficace.

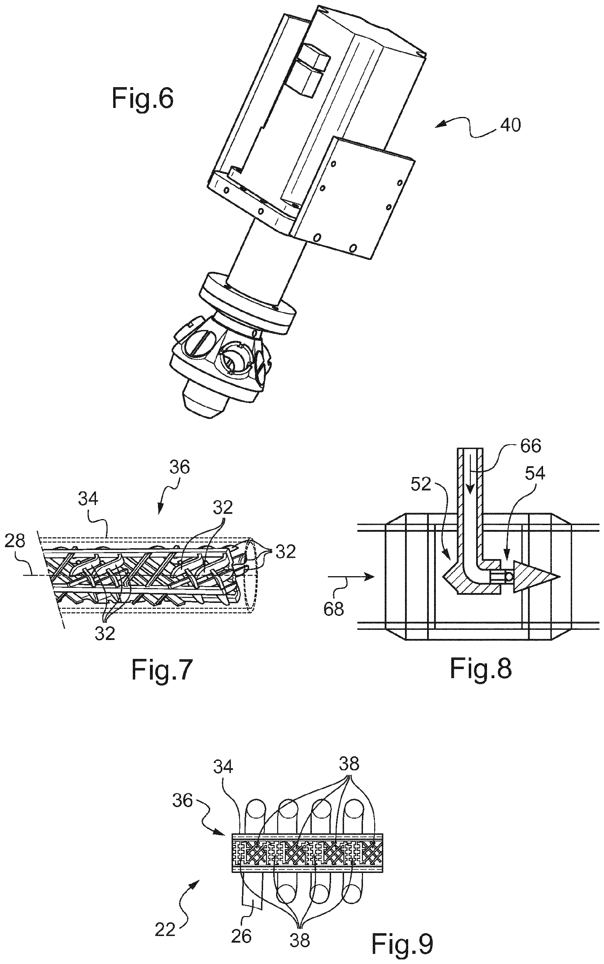

Le mélangeur 30 peut être un mélangeur dynamique 40 tel qu'illustré en figure 6. Alternativement, la figure 7 montre une vue en perspective de la structure interne d'un mode de réalisation du mélangeur 30 en mélangeur statique 36. Les mélangeurs statiques sont notamment connus pour être utilisés dans l'industrie du moulage par injection afin d'homogénéiser la matière avant l'injection dans un moule. Le mélangeur statique 36 en ligne 88 comprend au moins un élément de mélange présentant des surfaces de déflexion 32 du fluide visant à obtenir un mélange homogène du fluide sur une courte distance et avec un faible cisaillement. Les éléments de mélange peuvent présenter une densité de surface supérieure ou égale à 5*10³ m⁻¹, de préférence comprise entre 5*10³ m⁻¹ et 10*10³ m⁻¹. La densité de surface correspond à une quantité de surfaces de déflexion par volume et est donc exprimé en m²/m³, i.e. en m⁻¹.

Le mélangeur statique 36 peut en outre être pourvu d'une olive 52 au niveau du point d'injection du composants de base 66 dans la ligne 88, tel qu'illustré en figure 8). Cette olive 52 réduisant la section de passage libre 54 pour le composant 66 augmente alors localement la vitesse d'écoulement du composant de base lors de son mélange avec le composant 68 le faisant successivement passer d'un régime laminaire, à un régime intermédiaire ou turbulent au passage de l'olive, facilitant la dispersion du composant 66 dans le composant 68, puis à un régime laminaire. Ce mode de réalisation est particulièrement préféré lorsque le composant 66 comprend le catalyseur de réticulation. En effet, au point de contact, ou point de mélange, le catalyseur de réticulation se retrouve localement à une forte concentration augmentant fortement la cinétique de réaction avec le composant de base 68. L'augmentation locale de la vitesse de défilement permet alors de limiter le temps de contact, au point d'injection, entre le composant 66 et le composant 68 avant leur mélange plus homogène, et donc moins réactif localement. Cette augmentation locale de la vitesse de défilement du composant 66, tel que le catalyseur de réticulation, permet par exemple d'augmenter la concentration du catalyseur de réticulation à injecter sans craindre la réticulation locale au point de mélange.

Tel qu'illustré en traits discontinus en figure 7, le mélangeur statique présente l'ensemble des éléments de mélange comme comprenant des surfaces de déflexion 32 disposés dans un fourreau 34. Le fourreau 34 forme un conduit de circulation de la composition adhésive 80. Le mélangeur 36 étant disposé en ligne, le fourreau 34, en tant que conduit de circulation du mélangeur 36, est une portion de la ligne 88.

Le mélangeur statique 36 peut présenter la particularité de comporter un matériau conducteur électriquement. Dans ce document, on entend par un matériau conducteur électriquement, un matériau présentant une résistivité inférieure à 10 Ω.m, de préférence inférieur 10⁻⁶ Ω.m. Cette particularité permet l'ajout d'une fonction de chauffage par induction au mélangeur 36. Cet ajout d'une fonction de chauffage au mélangeur 36 peut aussi être réalisé lorsque le mélangeur est un mélangeur dynamique. Toutefois, les composants 66 et 68 pouvant être chauffés à la température d'application sans risque de réticulation, l'ajout de la fonction de chauffage présente particulièrement l'intérêt de maintenir la température d'application au niveau du mélangeur 36.

En référence à la figure 9, le mélangeur 36 sous forme de mélangeur statique peut être en partie inclus dans un dispositif de chauffage en ligne 22, ce dispositif 22 comprenant un câble inducteur entourant le mélangeur statique. Le dispositif de chauffage en ligne est de préférence disposé en amont du point de mélange des composants 66 et 68, une partie mélangeur statique 36 étant disposée en aval du point de mélange. Le champ magnétique généré par le câble inducteur 26 entourant le mélangeur statique 36 est alors susceptible d'induire un courant électrique, connu sous le nom de courant de Foucault, dans le conducteur électrique du mélangeur statique 36. Les courants de Foucault induits dans le conducteur électrique entraînent un dégagement de chaleur par effet Joule qui se diffuse à la composition adhésive 80 par l'intermédiaire des composants du mélangeur statique 36. Le câble inducteur 26 est par exemple alimenté à l'aide d'un courant électrique à haute fréquence, de préférence supérieure ou égale à 1 MHz, telle qu'à 15 MHz.

Selon un mode de réalisation préféré du dispositif de chauffage en ligne 22, le fourreau 34 est en matériau isolant électriquement. Dans ce document, on entend par matériau isolant électriquement un matériau présentant une résistivité supérieure ou égale à 10⁶ Ω.m. Le matériau isolant du fourreau 34 est par exemple du verre ou un prépolymère dépourvu de charges conductrices. Selon ce mode de réalisation préféré, les éléments de mélange 38 sont réalisés en matériau conducteur électriquement pour permettre le chauffage par induction du mélangeur statique 36. En effet, comme indiqué précédemment, le câble inducteur 26 est susceptible, avec une alimentation électrique en courant alternatif, d'induire un courant de Foucault dans tout conducteur électrique placé dans le champ magnétique produit.

L'induction des courants de Foucault se réalise alors directement dans les éléments de mélange 38 au niveau des surfaces de déflexion 32, et non pas au niveau du fourreau 34 placé entre le câble inducteur et les éléments de mélange 38. La réalisation d'une induction et d'un effet Joule au niveau des surfaces de déflexion 32 permet un chauffage plus efficace de la composition adhésive 80 qui rentre en contact directement avec ces surfaces de déflexion 32, sans intermédiaire.

Selon un mode de réalisation moins avantageux, le fourreau 34 est en matériau conducteur, de sorte que l'induction de courant de Foucault ne pénètre que le fourreau 34 et pas les éléments de mélange 38. L'effet Joule se produit alors au niveau du fourreau 34, et la chaleur se diffuse à la composition adhésive 80 par conduction grâce à l'intermédiaire des surfaces de déflexion 32. Dans ce mode de réalisation moins avantageux proposé, l'échange thermique est moins efficace du fait de l'utilisation d'un intermédiaire pour conduire la chaleur.

Selon un mode de réalisation préféré du procédé proposé 20, la buse d'application 50 peut aussi être chauffée. Le chauffage de la buse 50 contribue alors à la mise en température d'application de la composition adhésive 80. Ainsi selon ce mode de réalisation, la buse 50 d'application fait partie du dispositif de chauffage 22 à la température d'application. Le chauffage de la buse 50 permet d'apporter de l'énergie thermique en fin de ligne 88 pour amener la composition adhésive à la température finale d'application. Cette température finale d'application n'étant atteinte qu'en fin de ligne 88, le temps de séjour à cette température est court, limitant alors les risques de réticulation de la composition adhésive. Selon ce mode de réalisation, les composants de base 66 et 68 peuvent être chauffés à une température un peu plus faible, par exemple de 10°C ou moins, que la température finale d'application. La température de la composition adhésive 80 dans le mélangeur statique 30 étant plus faible que la température d'application, la durée de réticulation à cette température est plus faible et les risques de bouchon en ligne sont alors encore diminués.

Bien entendu, la présente invention n'est pas limitée aux exemples et aux modes de réalisation décrits et représentés, mais elle est susceptible de nombreuses variantes accessibles à l'homme de l'art.

## Revendications

1. Procédé d'application à chaud d'une composition adhésive (80) sur un support (96), à l'aide d'une installation d'application à chaud de la composition adhésive, l'installation comprenant :

    - une buse (50) d'application de la composition adhésive (80),
    - une ligne (88) d'alimentation de la buse (50) avec la composition adhésive (80) à appliquer sous forme fluide,
    - un mélangeur (30) disposé dans la ligne d'alimentation (88) pour le mélange homogène des composants de base de la composition adhésive avant son application ;

la composition adhésive (80) appliquée comportant comme composants de base :

- de 20% à 85% en poids, de préférence de 30 à 75% en poids de prépolymère silylé,
- de 15 à 80% en poids, de préférence de 25 à 70% en poids de résine tackifiante compatible ;

la composition adhésive comprenant en outre de 0,01 à 3 % en poids, de préférence de 0,1 à 2% en poids de catalyseur de réticulation ;
le procédé comprenant :

- l'approvisionnement de la ligne (88) d'alimentation avec l'au moins un prépolymère silylé séparé du catalyseur de réticulation,
- le mélange du catalyseur de réticulation avec les composants de base à l'aide du mélangeur (30),
- l'application à chaud de la composition adhésive (80) mélangé sur un support (96) à l'aide la buse d'application (50).

**2.** Procédé d'application à chaud selon la revendication 1, dans lequel, lors de l'approvisionnement de la ligne, le catalyseur de réticulation est séparé de l'ensemble des composants de base de la composition adhésive.

**3.** Procédé d'application à chaud selon la revendication 1 ou 2, dans lequel le mélangeur est un mélangeur statique.

**4.** Procédé d'application à chaud selon la revendication 3, dans lequel le mélangeur statique comporte un matériaux conducteur électriquement, l'installation d'application à chaud comprenant un dispositif de chauffage en ligne (22), en amont du point de mélange du catalyseur de réticulation avec les composants de base et incluant le mélangeur statique (30) et un câble inducteur (26) entourant le mélangeur statique (30), le procédé comprenant, préalablement à l'application à chaud, le chauffage de la composition adhésive jusqu'à la température d'application, par l'alimentation électrique du câble inducteur (26) du dispositif de chauffage en ligne (22).

**5.** Procédé d'application à chaud selon la revendication 1 ou 2, dans lequel le mélangeur est un mélangeur dynamique.

**6.** Procédé d'application à chaud selon l'une des revendications 1 à 4, dans lequel la composition adhésive à appliquer (80) comprend un prépolymère réactif réticulant dans une plage de température, la composition adhésive à appliquer (80) présentant une plage de température d'application incluse dans la plage de température de réticulation.

**7.** Procédé d'application à chaud selon l'une des revendications 1 à 6, dans lequel la composition adhésive à appliquer (80) réticule à l'humidité.

**8.** Procédé d'application à chaud selon l'une des revendications 1 à 7, dans lequel l'installation comprend des moyens de chauffage (44) apte à être disposés au niveau d'un réservoir de stockage (82) comprenant au moins un des composants de base séparés pour élever l'au moins un composant de base séparé à une température de pompage.

**9.** Procédé d'application à chaud selon la revendication 8, dans lequel l'au moins un composant de base séparé est élevée à une température de pompage comprise entre 50°C et 140°, de préférence comprise entre 80°C et 120°C, plus préférentiellement entre 100°C et 110°C.

**10.** Procédé d'application à chaud selon l'une des revendications 1 à 9, dans lequel la composition adhésive (80) est appliquée à une température comprise entre 50°C et 140°, de préférence comprise entre 80°C et 120°C, plus préférentiellement entre 100°C et 110°C.

Fig.1

Fig.2

Fig.3

Fig.4

Fig.5

Fig.6

Fig.7

Fig.8

Fig.9

Europäisches
Patentamt

European
Patent Office

Office européen
des brevets

**RAPPORT DE RECHERCHE EUROPEENNE**

Numéro de la demande

EP 19 18 7679

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | WO 2012/090151 A2 (BOSTIK SA [FR]; CHARTREL JEAN-FRANCOIS [FR]; GOUBARD DAVID [FR]; SAJOT) 5 juillet 2012 (2012-07-05) * page 17, ligne 24 - ligne 33 * * page 20, ligne 23 - ligne 25 * * page 24, ligne 23 - ligne 25 * * page 26, ligne 26 - ligne 27 * * revendications 1,3; figure 5 * ----- | 1-5,7-10 | INV. B05C5/02 B05C11/10 B01F3/08 C08G18/28 C09J7/00 |
| A | EP 1 508 384 A2 (MINEBEA CO LTD [JP]) 23 février 2005 (2005-02-23) * figure 4 * ----- | 2,3,5 | |
| A | US 4 835 021 A (FRONHEISER DENNIS R [US]) 30 mai 1989 (1989-05-30) * revendications; figures; exemples * ----- | 2,3,5 | |
| A | SEGGERN VON E ET AL: "REAKTIV BESCHICHTEN//ROTATIONSBESCHICHTEN VON WALZEN UND ROHREN MIT HOCHREAKTIVEN PUR-SYSTEMEN", KUNSTSTOFFE, CARL HANSER VERLAG, MUNCHEN, DE, vol. 89, no. 9, 1 septembre 1999 (1999-09-01), page 144, XP000958438, ISSN: 0023-5563 * figure 1 * ----- | 2,3,5 | DOMAINES TECHNIQUES RECHERCHES (IPC) B05C B01F B05D C08G C09J B05B |
| A | FR 2 760 981 A1 (RHONE POULENC CHIMIE [FR]) 25 septembre 1998 (1998-09-25) * page 15, ligne 34 - page 16, ligne 36; figures * ----- | 2,3,5 | |
| A | US 2006/233960 A1 (WARREN DANNY [US] ET AL) 19 octobre 2006 (2006-10-19) * alinéa [0025]; figure 3 * ----- | 2,3,5 | |

-/--

Le présent rapport a été établi pour toutes les revendications

| Lieu de la recherche | Date d'achèvement de la recherche | Examinateur |
|---|---|---|
| La Haye | 28 novembre 2019 | Slembrouck, Igor |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
...........................................................
& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 19 18 7679

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 3 659 790 A (GELIN ROBERT J) 2 mai 1972 (1972-05-02) * colonne 3, ligne 39 - ligne 58; figure 4 * ----- | 2,3,5 | |
| A | WO 01/02456 A1 (DORUS KLEBETECHNIK GMBH & CO K [DE]; KOHLSTADT HANS PETER [DE] ET AL.) 11 janvier 2001 (2001-01-11) * revendications; figures; exemples * ----- | 2,3,5 | |
| A | EP 1 978 069 A1 (TESA AG [DE]) 8 octobre 2008 (2008-10-08) * revendications; exemples * ----- | 2,3,5 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 28 novembre 2019 | Slembrouck, Igor |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
 
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 19 18 7679

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-11-2019

| Document brevet cité au rapport de recherche | Date de publication | Membre(s) de la famille de brevet(s) | Date de publication |
|---|---|---|---|
| WO 2012090151 A2 | 05-07-2012 | AU 2011350640 A1 | 11-07-2013 |
| | | BR 112013016672 A2 | 04-10-2016 |
| | | BR 122014029446 A2 | 13-08-2019 |
| | | CA 2821839 A1 | 05-07-2012 |
| | | CN 103476887 A | 25-12-2013 |
| | | CN 105482133 A | 13-04-2016 |
| | | EP 2658937 A2 | 06-11-2013 |
| | | EP 3181647 A2 | 21-06-2017 |
| | | ES 2622982 T3 | 10-07-2017 |
| | | JP 6062373 B2 | 18-01-2017 |
| | | JP 2014509329 A | 17-04-2014 |
| | | JP 2017095715 A | 01-06-2017 |
| | | KR 20140004670 A | 13-01-2014 |
| | | MX 348323 B | 07-06-2017 |
| | | RU 2013135296 A | 10-02-2015 |
| | | US 2013299074 A1 | 14-11-2013 |
| | | WO 2012090151 A2 | 05-07-2012 |
| EP 1508384 A2 | 23-02-2005 | EP 1508384 A2 | 23-02-2005 |
| | | JP 3998612 B2 | 31-10-2007 |
| | | JP 2005065366 A | 10-03-2005 |
| | | US 2005074553 A1 | 07-04-2005 |
| US 4835021 A | 30-05-1989 | AUCUN | |
| FR 2760981 A1 | 25-09-1998 | AT 306330 T | 15-10-2005 |
| | | AU 745793 B2 | 28-03-2002 |
| | | BR 9808387 A | 23-05-2000 |
| | | CA 2282678 A1 | 01-10-1998 |
| | | CN 1250399 A | 12-04-2000 |
| | | CN 1327013 A | 19-12-2001 |
| | | DE 69831858 T2 | 27-04-2006 |
| | | EP 0968058 A1 | 05-01-2000 |
| | | EP 1541247 A2 | 15-06-2005 |
| | | ES 2246532 T3 | 16-02-2006 |
| | | FR 2760981 A1 | 25-09-1998 |
| | | JP 3410477 B2 | 26-05-2003 |
| | | JP 2000513999 A | 24-10-2000 |
| | | US 6387452 B1 | 14-05-2002 |
| | | WO 9842450 A1 | 01-10-1998 |
| US 2006233960 A1 | 19-10-2006 | AU 2006237605 A1 | 26-10-2006 |
| | | CA 2605232 A1 | 26-10-2006 |
| | | EP 1888261 A2 | 20-02-2008 |
| | | JP 4944871 B2 | 06-06-2012 |
| | | JP 2008536681 A | 11-09-2008 |

EPO FORM P0460

Pour tout renseignement concernant cette annexe : voir Journal Officiel de l'Office européen des brevets, No.12/82

page 1 de 2

**EP 3 590 608 A1**

**ANNEXE AU RAPPORT DE RECHERCHE EUROPEENNE
RELATIF A LA DEMANDE DE BREVET EUROPEEN NO.**

EP 19 18 7679

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-11-2019

| Document brevet cité au rapport de recherche | | Date de publication | Membre(s) de la famille de brevet(s) | | Date de publication |
|---|---|---|---|---|---|
| | | | KR | 20080002898 A | 04-01-2008 |
| | | | NZ | 562986 A | 30-10-2009 |
| | | | US | 2006233960 A1 | 19-10-2006 |
| | | | US | 2008057209 A1 | 06-03-2008 |
| | | | US | 2009061098 A1 | 05-03-2009 |
| | | | US | 2012091226 A1 | 19-04-2012 |
| | | | WO | 2006112922 A2 | 26-10-2006 |
| US 3659790 | A | 02-05-1972 | AUCUN | | |
| WO 0102456 | A1 | 11-01-2001 | AU | 5818600 A | 22-01-2001 |
| | | | DE | 10030911 A1 | 01-03-2001 |
| | | | EP | 1194466 A1 | 10-04-2002 |
| | | | JP | 2003504433 A | 04-02-2003 |
| | | | WO | 0102456 A1 | 11-01-2001 |
| EP 1978069 | A1 | 08-10-2008 | AT | 468376 T | 15-06-2010 |
| | | | CA | 2677728 A1 | 16-10-2008 |
| | | | CN | 101679822 A | 24-03-2010 |
| | | | DE | 102007016950 A1 | 09-10-2008 |
| | | | EP | 1978069 A1 | 08-10-2008 |
| | | | ES | 2345680 T3 | 29-09-2010 |
| | | | JP | 5328762 B2 | 30-10-2013 |
| | | | JP | 2010523749 A | 15-07-2010 |
| | | | KR | 20100016262 A | 12-02-2010 |
| | | | TW | 200909485 A | 01-03-2009 |
| | | | US | 2010104864 A1 | 29-04-2010 |
| | | | WO | 2008122489 A1 | 16-10-2008 |

EPO FORM P0460

Pour tout renseignement concernant cette annexe : voir Journal Officiel de l'Office européen des brevets, No.12/82

page 2 de 2

13

**EP 3 590 608 A1**

**Documents brevets cités dans la description**

- WO 2012090151 A2